(19) Europäisches Patentamt / European Patent Office / Office européen des brevets

(11) **EP 4 451 452 A1**

(12) **EUROPEAN PATENT APPLICATION**
published in accordance with Art. 153(4) EPC

(43) Date of publication:
**23.10.2024 Bulletin 2024/43**

(21) Application number: **22950535.9**

(22) Date of filing: **12.07.2022**

(51) International Patent Classification (IPC):
**H01M 50/457** (2021.01)

(52) Cooperative Patent Classification (CPC):
**H01M 50/457; Y02E 60/10**

(86) International application number:
**PCT/CN2022/105167**

(87) International publication number:
**WO 2024/011404 (18.01.2024 Gazette 2024/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology (Hong Kong) Limited**
**Central, Central And Western District (HK)**

(72) Inventors:
• **LIU, Feng**
  **Ningde, Fujian 352100 (CN)**
• **FAN, Yulei**
  **Ningde, Fujian 352100 (CN)**
• **WANG, Yiheng**
  **Ningde, Fujian 352100 (CN)**
• **ZHONG, Wei**
  **Ningde, Fujian 352100 (CN)**
• **GE, Xiaoming**
  **Ningde, Fujian 352100 (CN)**

(74) Representative: **Ziebig Hengelhaupt Intellectual Property Attorneys**
**Patentanwaltskanzlei PartGmbB**
**Leipziger Straße 49**
**10117 Berlin (DE)**

(54) **SEPARATOR, SECONDARY BATTERY USING SAME, BATTERY MODULE, BATTERY PACK, AND ELECTRIC APPARATUS**

(57) The present application provides a separator, including first base films sequentially arranged in a stacked manner, a coating containing ceramic particles, graphene oxide and a binder, and a second base film. The separator in the present application has good electrolyte solution wettability, may effectively inhibit the growth of lithium dendrites, and has a small resistance, which may effectively improve the safety, dynamic and cycling performance of a corresponding battery. The present application further provides a secondary battery, battery module, battery pack and electrical apparatus using the separator.

FIG. 1

EP 4 451 452 A1

**Description**

**TECHNICAL FIELD**

The present application relates to the technical field of lithium batteries, in particular to a separator, and a secondary battery, battery module, battery pack and electrical apparatus using the same.

**BACKGROUND ART**

In recent years, with the increasingly wide use of lithium-ion batteries, the lithium-ion batteries are widely used in energy storage systems such as wind power, fire power, water power, and solar power stations, as well as power tools, electric bicycles and other fields. A lithium-ion battery usually includes a positive electrode sheet, a negative electrode sheet, an electrolyte solution and a separator arranged between the positive electrode sheet and the negative electrode sheet, and the separator is mainly used to prevent the short circuit of positive and negative electrodes, and at the same time allow ions to pass through freely. The separators used in the prior art are mostly polyolefin films. However, the wettability between the polyolefin films and the electrolyte solution is poor, and the lithium dendrites generated during battery use may pierce the separator and cause short circuit of the battery, causing safety risks.

In order to solve the above problems, technicians usually apply a coating on the separator to promote the wetting of the electrolyte solution to the separator and prevent the lithium dendrites from piercing the separator. Ceramic particles are one of the coatings that technicians usually apply. However, due to the poor adhesion between the ceramic particles and the polyolefin films, "powder shedding" is serious. For this reason, it is necessary to introduce a binder to increase a adhesion force between the ceramic particles and the polyolefin films to reduce powder shedding, but a large amount of binders will increase the resistance of the separator and deteriorate the kinetic performance of the secondary battery.

It can be seen that how to develop a separator with good wettability performance and low resistance is still a problem that researchers need to solve urgently.

**SUMMARY OF THE INVENTION**

The present application is made in view of the above problems, and its purpose is to provide a separator, which has good wettability, mechanical properties and low resistance at the same time, so that the secondary battery using it has good safety, dynamic and cycling performance.

A first aspect of the present application provides a separator, including first base films sequentially arranged in a stacked manner; a second base film; and a coating containing ceramic particles, graphene oxide and a binder located between the first base films and the second base film.

The separator described in the present application has a three-layer composite structure, has good electrolyte solution wettability and low resistance, and is conducive to improving the safety, dynamic and cycling performance of the secondary battery using the separator.

In any implementation, optionally, a mass ratio of the ceramic particles to the binder is 1:0.001-0.3, optionally 1:0.01-0.1.

When the mass ratio of the ceramic particles to the binder is within the above range, it is beneficial to make the coating have proper adhesion, so as to better prevent the ceramic particles from "powder shedding".

In any implementation, optionally, a mass ratio of a mass sum of the ceramic particles and the binder to the graphene oxide is 2-11:1, optionally 2-9:1.

When the mass ratio of the mass sum of the ceramic particles and the binder to the graphene oxide is within the above range, it is beneficial to increase ionic conductivity of the coating, improve the wettability of the separator, enhance its resistance to lithium dendrites, and improve the kinetic performance and safety performance of a corresponding secondary battery.

In any implementation, optionally, a mass ratio of the graphene oxide to the ceramic particles is 1:1.5-11, optionally 1:3-5.

When the mass ratio of the graphene oxide to the ceramic particles is within the above range, it is beneficial to promote the formation of intermolecular force and hydrogen bond between oxygen-containing functional groups on a surface of the graphene oxide and the ceramic particles, improve the adhesion of the ceramic particles on the separator, and then improve the overall adhesion of the coating, and also help prevent the stacking of graphene oxide plates from blocking the micropores of the separator.

In any implementation, optionally, the graphene oxide is a graphene oxide plate, and optionally, the largest lateral dimension of the graphene oxide plate is 0.01-10 $\mu$m.

Graphene oxide with a small sheet size can prevent graphite from covering the micropores on the separator and thus reduce the gas permeability of the separator, thereby avoiding the obstruction of ion transmission and the increase in the impedance of the separator.

In any implementation, optionally, the ceramic particles are selected from one or more of oxides, nitrides or oxysalts of the following elements: Si, Fe, Sn, Ti, Cu, Mg, Ge, Zn, Zr and B;

optionally, one or more of oxides of Si, nitrides of Si, oxides of Fe, nitrides of Fe, oxysalts of Fe, oxides of Sn, oxides of Ti, nitrides of Ti, oxysalts of Ti, oxides of Cu, nitrides of Cu, oxides of Mg, oxides of Ge, oxides of Zn, oxides of zirconium, and boron nitride; and

further optionally, one or more of titanium dioxide ($TiO_2$), silicon dioxide ($SiO_2$), tin dioxide ($SnO_2$), zinc oxide (ZnO), zirconium oxide ($ZrO_2$), and lithium titanate.

When the ceramic particles are selected from the above materials, the mechanical strength, electrolyte solution wettability and electrochemical stability of the separator may be effectively improved.

In any implementation, optionally, a particle size of the ceramic particles is 0.01-10 μm, optionally 0.05-0.5 μm.

When the particle size of the ceramic particles is within the above range, it is not only beneficial to avoid "powder shedding" caused by too large particle size, but also beneficial to avoid blocking a base film channel and deteriorating the kinetic performance when the particle size is too small.

In any implementation, optionally, the binder is selected from one or more of dopamine hydrochloride, polyvinylidene fluoride, polytetrafluoroethylene, a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, fluorinated acrylate, butadiene styrene rubber, sodium polyacrylate, polymethylacrylic acid, polyacrylamide, polyvinyl alcohol, sodium alginate, carboxymethyl chitosan, and sodium carboxymethylcellulose.

In any implementation, optionally, a thickness of the coating is 0.1-10 μm, optionally 1-6 μm.

When the thickness of the coating is within the above range, it can not only effectively consume the lithium dendrites, prevent them from piercing the separator and causing safety problems, but also help prevent the coating from causing a significant increase in the resistance of the separator.

In any implementation, optionally, the first base film and the second base film are each independently selected from one or more of polyethylene, polypropylene, polytetrafluoroethylene, polyvinylidene fluoride, polyvinyl chloride, polyamide, and polyester.

In any implementation, optionally, the first base film and/or the second base film are/is subjected to a wetting treatment with a graphene oxide dispersion.

The pretreatment of the base film by the graphene oxide dispersion may improve the composite efficiency of the coating and the base film, and reduce the use of binders, thereby reducing the resistance of the separator.

In any implementation, optionally, a thickness of the first base film and/or the second base film is 3-30 μm, optionally 5-25 μm.

In any implementation, optionally, the separator satisfies: $\rho_s \leq 10^7 m\Omega \cdot cm$, optionally $\rho_s \leq 5 \times 10^6 m\Omega \cdot cm$, wherein $\rho_s$ represents an ionic resistivity of the separator.

When $\rho_s$ is within the above range, the ionic resistivity of the separator is small, which is beneficial to improve the kinetic performance of a corresponding secondary battery.

A second aspect of the present application provides a secondary battery, including the separator of the first aspect of the present application.

A third aspect of the present application provides a battery module, including the secondary battery of the second aspect of the present application.

A fourth aspect of the present application provides a battery pack, including at least one of the secondary battery of the second aspect of the present application or the battery module of the third aspect of the present application.

A fifth aspect of the present application provides an electrical apparatus, including at least one of the secondary battery of the second aspect of the present application, the battery module of the third aspect of the present application or the battery pack of the fourth aspect of the present application.

[Beneficial effects]

The separator of the present application has a three-layer composite structure, and the coating in the middle includes the ceramic particles, the graphene oxide and the binder. On the one hand, the ceramic particles may promote the wetting of the electrolyte solution to the separator, and on the other hand, they may also effectively consume the generated lithium dendrites, preventing the lithium dendrites from piercing the separator and improving the safety performance. The surface of graphene oxide in the coating is rich in various polar groups. On the one hand, it may further promote the wetting of the electrolyte solution to the base film. On the other hand, it may help reduce the resistance through the following functions, thereby improving the kinetic performance of the corresponding battery: first, graphene oxide itself may be combined with the base film through Van der Waals' force, reducing the use of the binders; second, graphene oxide can provide a large number of channels for the free transmission of ions and improve the ionic conductivity of the separator. In addition, the coating is located between the first base film and the second base film. The base film itself may exist as a "barrier layer", which can effectively prevent the direct contact between the ceramic particles and the positive and negative electrodes. On the one hand, it helps to further improve the safety performance of the corresponding secondary battery. On the other hand, it also helps to avoid many side reactions, improve the stability of the corresponding battery during use, and improve the cycling performance.

The battery module, battery pack, and electrical apparatus of the present application include the secondary battery provided by the present application, and thus have at least the same advantages as those of the secondary battery.

## BRIEF DESCRIPTION OF THE DRAWINGS

Fig. 1 is a schematic diagram of a separator of the present application.
Fig. 2 is a schematic diagram of a secondary battery of an implementation of the present application.
Fig. 3 is an exploded diagram of the secondary battery of an implementation of the present application shown in Fig. 2.
Fig. 4 is a schematic diagram of a battery module of an implementation of the present application.
Fig. 5 is a schematic diagram of a battery pack of an implementation of the present application.
Fig. 6 is an exploded diagram of the battery pack of an implementation of the present application shown in Fig. 5.
Fig. 7 is a schematic diagram of an electrical apparatus in which a secondary battery is used as a power source of an implementation of the present application.

Description of reference numerals:

1 battery pack; 2 upper box body; 3 lower box body; 4 battery module; 5 secondary battery; 51 case; 52 electrode assembly; 53 top cover assembly; 11 first base film; 12 ceramic particle; 13 graphene oxide plate; and 14 second base film.

## DETAILED DESCRIPTION

Hereinafter, implementations of a separator, and a secondary battery, battery module, battery pack and electrical apparatus using the same of the present application are specifically disclosed by referring to the detailed description of the drawings as appropriate. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate the understanding by those skilled in the art. In addition, the drawings and subsequent descriptions are provided for those skilled in the art to fully understand the present application, and are not intended to limit the subject matter recited in the claims.

A "range" disclosed in the present application is defined in terms of a lower limit and an upper limit, and a given range is defined by selecting a lower limit and an upper limit, which define the boundaries of the particular range. The range defined in this manner may be inclusive or exclusive of end values, and may be arbitrarily combined, that is, any lower limit may be combined with any upper limit to form a range. For example, if ranges of 60-120 and 80-110 are listed for a particular parameter, it is understood that the ranges of 60-110 and 80-120 are also contemplated. Additionally, if minimum range values 1 and 2 are listed, and if maximum range values 3, 4 and 5 are listed, the following ranges are all contemplated: 1-3, 1-4, 1-5, 2-3, 2-4 and 2-5. In the present application, unless otherwise stated, the numerical range "a-b" represents an abbreviated representation of any combination of real numbers between a and b, where a and b are both real numbers. For example, the numerical range "0-5" indicates that all real numbers between "0-5" have been listed in this article, and "0-5" is only an abbreviated representation of the combination of these values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method comprises steps (a) and (b), meaning that the method may comprise steps (a) and (b) performed sequentially, or may comprise steps (b) and (a) performed sequentially. For example, the reference to the method may further include step (c), meaning that step (c) may be added to the method in any order. For example, the method may include steps (a), (b) and (c), or may further include steps (a), (c) and (b), or may further include steps (c), (a) and (b), and the like.

Unless otherwise specifically stated, the "including" and "comprising" mentioned in the present application mean open-ended, or may be closed-ended. For example, the "including" and "comprising" may indicate that it is possible to include or comprise other components not listed, and it is also possible to include or comprise the only listed components.

It should be noted that, in the present application, terms related to graphene may be understood with reference to the meaning in the standard GB/T 30544.13-2018, and relevant parameters may also be measured with reference to this standard. For example, according to GB/T 30544.13-2018, the term "two-dimensional material" refers to a material composed of one or several layers, in which atoms in each layer are closely bonded to the adjacent atoms in the layer, and one dimension (namely, its thickness) is on the scale of nanometers or smaller, and the other two dimensions are usually on a larger scale; and the term "lateral dimension" refers to a lateral size of a two-dimensional material sheet.

If not specifically stated, the term "or" is inclusive in the present application. By way of instances, the phrase "A or B" means "A, B, or both A and B". More specifically, the condition "A or B" is satisfied by any of the following: A is true (or present) and B is false (or absent); A is false (or absent) and B is true (or present); or both A and B are true (or present).

The inventor found in practical work that in the prior art, in order to improve the wetting of the electrolyte solution to the polyolefin film, a ceramic coating is usually applied on the surface of the polyolefin film. In order to improve the adhesion performance of the ceramic particles and the base film, it is necessary to use a large amount of binders, which will lead to an increase in the resistance of the separator.

Unexpectedly, the inventors found after conducting a large number of experiments that by applying the coating containing the ceramic particles, the graphene oxide and the binder between the two base films, the wetting of the electrolyte solution on the separator may be promoted, lithium dendrites may be effectively prevented from piercing the separator, and the resistance of the separator caused by the application of the coating or the use of a large amount of binders may be avoided, many side reactions may further be avoided, and the operation stability of the corresponding battery is improved, so that the safety, dynamic and cycling performance of the secondary battery using the separator are improved.

[Separator]

A first aspect of the present application provides a separator, including first base films sequentially arranged in a stacked manner; a second base film; and a coating containing ceramic particles, graphene oxide and a binder located between the first base films and the second base film.

The separator of the present application has a three-layer composite structure, and the coating in the middle includes the ceramic particles, the graphene oxide and the binder. On the one hand, the ceramic particles may promote the wetting of the electrolyte solution to the separator, the heat resistance and mechanical performance of the separator, and on the other hand, they may also effectively consume the generated lithium dendrites, preventing the lithium dendrites from piercing the separator and improving the safety performance. The surface of graphene oxide in the coating is rich in various polar groups. On the one hand, it may further promote the wetting of the electrolyte solution to the base film. On the other hand, it may help reduce the resistance through the following functions, thereby improving the kinetic performance of the corresponding battery: first, graphene oxide itself may be combined with the base film through Van der Waals' force, reducing the use of the binders; second, graphene oxide can provide a large number of channels for the free transmission of ions and improve the ionic conductivity of the separator. In addition, the coating is located between the first base film and the second base film. The base film itself may exist as a "barrier layer", which can effectively prevent the direct contact between the ceramic particles and the positive and negative electrodes. On the one hand, it helps to further improve the safety performance of the corresponding secondary battery. On the other hand, it also helps to avoid many side reactions, improve the stability of the corresponding battery during use, and improve the cycling performance.

In some implementations, optionally, a mass ratio of the ceramic particles to the binder is 1:0.001-0.3, optionally 1:0.01-0.1. As an example, the ratio may be 1:0.001, 1:0.005, 1:0.006, 1:0.01, 1:0.013, 1:0.017, 1:0.02, 1:0.026, 1:0.033, 1:0.05, 1:0.06, 1:0.1 or 1:0.3 and a range composed of any two of the above ratios.

When the mass ratio of ceramic particles to binder is within the above range, it is beneficial to make the coating have proper adhesion, better prevent the ceramic particles from "powder shedding", and give full play to the role of the ceramic particles in improving the wettability of the separator and consuming lithium dendrites, and improving the safety performance of the corresponding secondary battery.

In some implementations, optionally, a mass ratio of a mass sum of the ceramic particles and the binder to the graphene oxide is (2-11):1, optionally (2-9):1. As an example, the ratio may be 2:1, 3:1, 3.1:1, 5:1, 5.1:1, 5.3:1, 5.5:1, 6.5:1, 8:1, 9:1, 10:1 or 11:1 and a range composed of any two of the above ratios.

When the mass ratio of the mass sum of the ceramic particles and the binder to the graphene oxide is within the above range, it is beneficial to make the coating have proper adhesion, so as to give full play to the role of the ceramic particles in improving the wettability of the separator and consuming the lithium dendrites, and meanwhile give play to the role of the graphene oxide in reducing the use of the binders and promoting free transmission of ions, reduce the resistance of the separator, and improve the kinetic performance of the corresponding secondary battery.

In some implementations, optionally, a mass ratio of the graphene oxide to the ceramic particles is 1:(1.5-11), optionally 1:(3-5). As an example, the ratio may be 1:1.5, 1:1.95, 1:3, 1:5, 1:8, 1:8.95, 1:9, 1:10 or 1:11 and a range composed of any two of the above ratios.

The surface of the graphene oxide is rich in oxygen-containing functional groups, when the mass ratio of the graphene oxide to the ceramic particles is within the above range, it is beneficial to promote the formation of intermolecular force and hydrogen bond between oxygen-containing functional groups on a surface of the graphene oxide and the ceramic particles, improve the adhesion of the ceramic particles on the separator, and then improve the overall adhesion of the coating, and also help prevent the stacking of graphene oxide plates from blocking the micropores of the separator. In addition, when the mass ratio of graphene oxide to ceramic particles is within the above range, it is also beneficial to improve the coating's ability to consume lithium dendrites.

In some implementations, optionally, based on a total weight of the coating, the content of the graphene oxide is 5-40%, optionally 15-30%;

the content of the ceramic particles is 25-95%, optionally 70-85%; and
the content of the binder is 0.001-8%, optionally 0.01%-0.5%.

In some implementations, optionally, the mass ratio of the graphene oxide to the ceramic particles to the binder is 0.09-1:1:0.001-0.3. As an example, the above ratio may be 0.1:1:0.001, 0.2:1:0.001, 0.2:1:0.01, 0.2:1:0.1, 0.2:1:0.3, 0.3:1:0.3, 0.5:1:0.2 or 1:1:0.3 and a range composed of any two of the above ratios.

In some implementations, optionally, the graphene oxide is a graphene oxide plate, and optionally, the largest lateral dimension of the graphene oxide plate is 0.01-10 $\mu$m.

The surface of graphene oxide is rich in oxygen-containing functional groups such as hydroxyl, carboxyl, and aldehyde groups, so it can effectively improve the lyophilicity of the separator, so that the electrolyte solution can quickly wet the separator. In addition, the stacked graphene oxide plates create a large number of gaps to allow lithium ions to freely transmit in the pores of the sheets, which improves the ionic conductivity of the separator. In addition, graphene oxide with a small sheet size is conducive to preventing graphite from covering the micropores on the separator and thus reducing the gas permeability of the separator, thereby avoiding the obstruction of ion transmission and the increase in the impedance of the separator.

In some implementations, optionally, the ceramic particles are selected from one or more of oxides, nitrides or oxysalts of the following elements: Si, Fe, Sn, Ti, Cu, Mg, Ge, Zn, Zr and B;

optionally, one or more of oxides of Si, nitrides of Si, oxides of Fe, nitrides of Fe, oxides of Fe, oxides of Sn, oxides of Ti, nitrides of Ti, oxysalts of Ti, oxides of Cu, nitrides of Cu, oxides of Mg, oxides of Ge, oxides of Zn, oxides of zirconium, and boron nitride; and
further optionally, one or more of titanium dioxide ($TiO_2$), silicon dioxide ($SiO_2$), tin dioxide ($SnO_2$), zinc oxide (ZnO), zirconium oxide ($ZrO_2$), and lithium titanate.

In the present application, the first base film and the second base film have strong hydrophobicity and poor affinity with a highly polar electrolyte solution, which makes the base film unable to absorb and retain the electrolyte solution. The ceramic particles described in the present application have strong hydrophilicity, which is conducive to significantly improving the electrolyte solution wettability of the separator.

In addition, the lithium dendrites are unavoidable during several charge-discharge cycles of Li metal batteries. If left unchecked, the lithium dendrites would eventually contact and pierce the separator, causing the positive and negative electrodes to contact, causing safety concerns. The components contained in the ceramic particles described in the present application, such as silicon dioxide, can undergo a lithium intercalation reaction and consume the generated lithium dendrites in time, thereby improving the safety performance of the corresponding battery.

The reaction mechanism of ceramic particles consuming lithium dendrites described in the present application may be divided into an alloying reaction mechanism, an intercalation reaction mechanism and a redox mechanism:

1) The alloying reaction mechanism: metal oxides react with the lithium dendrites, accompanied by the formation of simple metals, and then the generated simple metals undergo further alloying reactions to generate lithium alloys. The reaction equation is:

$$A_xO_Y + 2y\text{Li}^+ + 2ye^- \rightarrow xA + y\text{Li}_2O$$

$$A + zLi^+ + ze^- \leftrightarrow Li_zA$$

Taking tin dioxide As an example, during a discharge process, tin element and $Li_2O$ are first generated, and then tin element reacts with $Li^+$ to generate a $Li_{4.4}Sn$ compound.

2) The intercalation reaction mechanism: $Li^+$ can only be embedded in gaps of an interlayer structure of the material during the charge and discharge process. The chemical reaction formula of the charge and discharge process is:

$$AO_x + yLi^+ + ye^- \leftrightarrow Li_yAO_x$$

The representative ceramic materials of the intercalation reaction mechanism are mainly $SiO_2$, $TiO_2$, lithium titanate and so on.

3) The conversion reaction mechanism: metal oxides and $Li^+$ undergo a redox reaction to generate metal element and $Li_2O$. The chemical reaction formula is:

$$A_xO_Y + 2yLi^+ + 2ye^- \rightarrow xA + yLi_2O$$

In some implementations, optionally, a particle size of the ceramic particles is 0.01-10 $\mu$m, optionally 0.05-0.5 $\mu$m.

When the particle size of the ceramic particles is too large, the viscosity of the slurry of the prepared coating is relatively high, and the uniformity is not easy to ensure, so it is difficult to coat on the separator. In addition, in the process of coating the separator, the phenomenon of "powder shedding" is prone to occurring, and the powder is difficult to adhere to the surface of the separator, resulting in unsatisfactory coating effect and difficult to achieve expectations. If the particle size is too small, when the ceramic particles are coated, the ceramic particles will block pores on a surface of an organic microporous material, reducing the air permeability of the separator, thereby blocking an ion transmission channel, resulting in a significant loss of battery capacity and cycle life.

In addition, when the particle size of the ceramic particles is within the above range, the introduction of the ceramic particles is beneficial to increase the porosity of the separator, accelerate the diffusion of $Li^+$, and improve the ionic conductivity of the separator.

In some implementations, optionally, the binder is selected from one or more of dopamine hydrochloride, polyvinylidene fluoride, polytetrafluoroethylene, a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, fluorinated acrylate, butadiene styrene rubber, sodium polyacrylate, polymethylacrylic acid, polyacrylamide, polyvinyl alcohol, sodium alginate, carboxymethyl chitosan, and sodium carboxymethylcellulose.

In some implementations, optionally, a thickness of the coating is 0.1-10 $\mu$m, optionally 1-6 $\mu$m.

When the thickness of the coating is within the above range, it can not only effectively consume the lithium dendrites, prevent them from piercing the separator and causing safety problems, but also help prevent the coating from causing a significant increase in the resistance of the separator.

In some implementations, optionally, the first base film and the second base film are each independently selected from one or more of polyethylene, polypropylene, polytetrafluoroethylene, polyvinylidene fluoride, polyvinyl chloride, polyamide, and polyester.

In some implementations, optionally, the first base film and/or the second base film are/is subjected to a wetting treatment with a graphene oxide dispersion.

The pretreatment of the base film by the graphene oxide dispersion may make the surface of the base film contain many polar groups, increase the hydrophilicity of the base film, and thus improve the wettability of the electrolyte solution to the base film. In addition, the surface of the base film contains many polar groups, which helps to improve the composite efficiency of the coating and the base film, and reduce the use of binders, thereby reducing the resistance of the separator.

In some implementations, optionally, a weight-average molecular weight of the first base film and the second base film is 100000-1000000. The weight-average molecular weight may be measured by a method commonly used in this field, such as gel permeation chromatography according to GB/T 21863-2008.

In some implementations, optionally, a thickness of the first base film and/or the second base film is 3-30 $\mu$m, optionally 5-25 $\mu$m.

The thickness of the separator is too small, which may lead to poor mechanical stability of the separator and make it difficult to fully utilize the role of the positive and negative electrode sheets between the separators. The thickness of the separator is too large, which may lead to an increase in the resistance of the separator, making it more difficult for lithium ions to transmit through the separator, leading to a decrease in battery performance.

In some implementations, optionally, the separator satisfies: $\rho_s \leq 10^7 m\Omega \cdot cm$, optionally $\rho_s \leq 5 \times 10^6 m\Omega \cdot cm$, where $\rho_s$ represents an ionic resistivity of the separator.

When $\rho_s$ is within the above range, the ionic resistivity of the separator is small, which is beneficial to improve the kinetic performance of a corresponding secondary battery.

In some implementations, the present application further provides a method for preparing the separator in the present application, at least including the following steps:

step 1, graphene oxide, ceramic particles and a binder are fully mixed in an appropriate solvent according to a mass ratio of (0.09-1): 1 :(0.001-0.3) to obtain mixed slurry;

step 2, one surfaces of the first base film and the second base film are coated with the mixed slurry obtained in step 1; and

step 3, the first base film and the second base film obtained in step 2 are overlaid along a coating side, and the solvent is removed through hot pressing and drying.

In some implementations, optionally, the solvent in step 1 is water, N-N dimethylformamide (DMF), N-methylpyrrolidone (NMP) and the like.

In some implementations, optionally, the graphene oxide described in step 1 is a graphene oxide dispersion.

In some implementations, optionally, a solid content of the graphene oxide dispersion is 0.1-5%, optionally 0.3-3%.

In some implementations, optionally, the graphene oxide dispersion may be obtained by adding graphene oxide to the solvent and then dispersing evenly using ultrasound.

In some implementations, optionally, the solvent in the graphene oxide dispersion may be selected from one or more of water, ethanol, isopropanol, n-butanol and isobutanol.

In some implementations, optionally, the first base film and the second base film are pretreated with the graphene oxide dispersion before performing step 2.

In some implementations, optionally, the dispersion for pretreating the base film is a water dispersion of the graphene oxide or an isopropanol dispersion of the graphene oxide.

In some implementations, optionally, pretreating refers to completely immersing the base film into the graphene oxide dispersion, holding it for 15-120 s, optionally 30-90 s, and then taking it out for drying.

In some implementations, optionally, coating in step 2 may be performed by a coating method commonly used in the field, such as scraper coating, roller coating, or extruder coating.

In some implementations, optionally, hot pressing in step 3 is performed at a temperature of 90-150°C, optionally 120-140°C.

In some implementations, optionally, a coating density of the coating on the separator obtained in step 3 is 1.0-6.0 g/m$^2$, optionally 1.5-4.5 g/m$^2$.

In some implementations, optionally, in the separator of the present application, the mass ratio of the graphene oxide to the ceramic particles to the binder is (0.09-1):1:(0.001-0.3). As an example, the ratio may be 0.2:1:0.02, 0.33:1: 0.033, 1.125:1:0.0125, 0.1:1:0.001, 0.2:1:0.01, 0.2: 1:0.06, 0.2: 1:0.02, 0.2: 1:0.001, 0.2: 1:0.006, 0.5: 1:0.03, 0.1: 1:0.006, or 0.09: 1:0.004 and a range composed of any two of the above ratios.

[Secondary battery]

A second aspect of the present application provides a secondary battery, including the separator of the first aspect of the present application. Generally, in addition to the separator, the secondary battery further includes a positive electrode sheet, a negative electrode sheet and an electrolyte solution.

Specifically, the separator of the present application may also be used for lithium metal batteries, replacing traditional separators for use. A negative electrode of the lithium metal battery may be lithium metal or lithium alloy, or there is no negative electrode. A corresponding positive electrode material is described as follows. If there is no negative lithium metal battery, the positive electrode material needs to provide a lithium source.

Preparation of the secondary battery may be performed by a method commonly used in the field, for example, the positive electrode sheet, the negative electrode sheet and the separator may be made into an electrode assembly by a winding process or a lamination process, and then the electrolyte solution is injected into the electrode assembly and sealed to obtain the secondary battery.

The above components of the secondary battery are described respectively below.

[Positive electrode sheet]

The positive electrode sheet includes a positive-electrode current collector and a positive electrode film layer arranged on at least one surface of the positive-electrode current collector. As an example, the positive-electrode current collector has two opposite surfaces in its own thickness direction, and the positive electrode film layer is arranged on either or both of the two opposite surfaces of the positive-electrode current collector.

In some implementations, the positive-electrode current collector may be a metal foil or a composite current collector. For example, an aluminum foil can be used as the metal foil. The composite current collector may include a high molecular material substrate layer and a metal layer formed on at least one surface of the high molecular material substrate layer. The composite current collector may be formed by forming a metal material (aluminium, aluminium alloy, nickel, nickel alloy, titanium, titanium alloy, silver and silver alloy, etc.) on the high molecular material substrate (such as polypropylene (PP), polyethylene terephthalate (PET), polybutylene terephthalate (PBT), polystyrene (PS), and polyethylene (PE)).

In the present application, the positive electrode material is a compound that can reversibly embed and de-embed $Li^+$.

In some implementations, the positive electrode active material may be a positive electrode active material for batteries well known in the field. As an example, lithium-containing composite oxides, spinel-like oxides, metal chalcogenide of a layered structure, olivine structures and the like represented by $Li_xMO_2$ or $Li_yM_2O_4$ (where M is a transition metal, $0 \leq x \leq 1$, and $0 \leq y \leq 2$) may be listed. For example, lithium cobalt oxides such as $LiCoO_2$, lithium manganese oxides such as $LiMn_2O_4$, lithium nickel oxides such as $LiNiO_2$, lithium titanium oxides such as $Li_{4/3}Ti_{5/3}O_4$, lithium manganese nickel composite oxides, lithium manganese nickel cobalt composite oxides, materials with olivine type crystalline structures such as $LiMPO_4$ (M=Fe, Mn, Ni), and the like may be listed.

In some implementations, optionally, the positive electrode active material is the lithium-containing composite oxides of the layered structure or spinel-like structure, such as lithium manganese nickel cobalt composite oxides represented by $LiCoO_2$, $LiMn_2O_4$, $LiNiO_2$, $LiNi_{1/2}Mn_{1/2}O_2$ and the like, lithium manganese nickel cobalt composite oxides represented by $LiNi_{1/3}Mn_{1/3}Co_{1/3}O_2$, $LiNi_{0.6}Mn_{0.2}Co_{0.2}O_2$ and the like, or lithium-containing composite oxides represented by $LiNi_{1-x-y-z}Co_xAl_yMg_zO_2$ (where, $0 \leq x \leq 1$, $0 \leq y \leq 0.1$, $0 \leq z \leq 0.1$ and $0 \leq 1-x-y-z \leq 1$) and the like. In addition, a part of constituent elements in the above lithium-containing composite oxides, and the lithium-containing composite oxides replaced by additional elements such as Ge, Ti, Zr, Al, Mo, Sn and the like are also included in the scope of the present application.

In addition to the above positive electrode active material, other conventional materials capable of being used as the positive electrode active materials for batteries may also be used. It is possible to use only one of these positive active materials alone, or to use more than two in combination. For example, by simultaneously using the lithium-containing composite oxides of the layered structure and the lithium-containing composite oxides of the spinel-like structure, it is possible to take both high capacity and safety improvements into account.

In some implementations, optionally, a mass percentage of the positive electrode active material accounting for the positive electrode sheet is 75% to 99%, optionally 80% to 97%.

In some implementations, the positive electrode film layer further optionally includes a conductive agent. As an example, the conductive agent may include at least one of superconducting carbon, acetylene black, carbon black, Ketjen black, carbon dot, carbon nanotubes, graphene, and carbon nanofibers.

In some implementations, optionally, the conductive agent accounts for 0.05-5% of the total weight of the positive electrode film layer, optionally 0.5-3%.

In some implementations, the positive electrode film layer further optionally includes a binder, such as polyvinylidene fluoride, polytetrafluoroethylene, a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, polyethylene oxide and other binders commonly used in a battery field.

In some implementations, optionally, the binder accounts for 0.1-3.5% of the total weight of the positive electrode film layer, optionally 0.5-2.5%.

In some implementations, the positive electrode sheet may be prepared by the following modes: dispersing components for preparing the positive electrode sheet, for example, the positive electrode active material, the conductive agent, the binder and any other components in a solvent (for example, N-methyl pyrrolidone) to form a positive electrode slurry; and coating a positive-electrode current collector with the positive electrode slurry, followed by oven drying, cold pressing and other procedures, to obtain the positive electrode sheet.

[Negative electrode sheet]

The negative electrode sheet includes a negative-electrode current collector and a negative electrode film layer arranged on at least one surface of the negative-electrode current collector. As an example, the negative-electrode current collector has two opposite surfaces in its own thickness direction, and the negative electrode film layer is arranged on either or both of the two opposite surfaces of the negative-electrode current collector.

In some implementations, the negative-electrode current collector may be a metal foil or a composite current collector. For example, a copper foil can be used as the metal foil. The composite current collector may include a high molecular material substrate layer and a metal layer formed on at least one surface of the high molecular material substrate. The composite current collector may be formed by forming a metal material (copper, copper alloy, nickel, nickel alloy, titanium, titanium alloy, silver and silver alloy, etc.) on the high molecular material substrate (such as polypropylene (PP), polyethylene terephthalate (PET), polybutylene terephthalate (PBT), polystyrene (PS), and polyethylene (PE)).

In the present application, the negative electrode material is a compound that can embed-de-embed lithium metal and lithium.

In some implementations, the negative electrode active material may be a negative electrode active material for batteries well known in the field. As an example, alloys such as aluminum, silicon, tin, or various materials such as oxides and carbon may be used as the negative electrode active material. Optionally, the oxides may be listed as titanium dioxide and the like, the carbon materials may be listed as graphite, pyrolytic carbon, coke, glassy carbon, a sintered body of an organic polymer compound, mesophase carbon microspheres and the like. The tin-based material may be selected from at least one of elemental tin, a tin-oxygen compound, and a tin alloy. However, the present application is not limited to these materials, and other conventional materials useful as negative electrode active materials for batteries can also be used. It is possible to use only one of these negative active materials alone, or to use more than two in combination.

In some implementations, optionally, a mass percentage of the negative electrode active material accounting for the negative electrode sheet is 75% to 99%, optionally 80% to 97%.

In some implementations, the negative electrode film layer further optionally includes a conductive agent. The conductive agent may be selected from at least one of superconducting carbon, acetylene black, carbon black, Ketjen black, carbon dot, carbon nanotubes, graphene, and carbon nanofibers.

In some implementations, optionally, the conductive agent accounts for 0.05-5% of the total weight of the negative electrode film layer, optionally 0.5-3%.

In some implementations, the negative electrode film layer further optionally includes a binder, such as polyvinylidene fluoride, polytetrafluoroethylene, a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, polyethylene oxide and other binders commonly used in a battery field.

In some implementations, optionally, the binder accounts for 0.1-3.5% of the total weight of the negative electrode film layer, optionally 0.5-2.5%.

In some implementations, the negative electrode film layer further optionally includes other additives, such as a thickening agent (such as carboxymethyl cellulose sodium (CMC-Na)).

In some implementations, optionally, a mass percentage of the thickening agent accounting for the negative electrode sheet is 0.04% to 5%, optionally 0.5% to 3%.

In some implementations, the negative electrode sheet may be prepared by the following modes: dispersing components for preparing the negative electrode sheet, for example, the negative electrode active material, the conductive agent, the binder and any other components in a solvent (for example, deionized water) to form a negative electrode slurry; and coating a negative-electrode current collector with the negative electrode slurry, followed by oven drying, cold pressing and other procedures, to obtain the negative electrode sheet.

[Electrolyte]

The electrolyte plays a role in conducting ions between the positive electrode sheet and the negative electrode sheet. The type of the electrolyte is not particularly limited in the present application, and can be selected according to requirements. For example, the electrolyte may be in a liquid, gel, or full solid state.

In some embodiments, an electrolyte solution is used as the electrolyte. The electrolyte solution includes an electrolyte salt and a solvent.

In some implementations, a non-aqueous solvent (organic solvent) is used as a non-aqueous electrolyte solution. The non-aqueous solvent includes carbonates, ethers and the like.

In some implementations, the carbonates include cyclic carbonates and chain carbonates. The cyclic carbonates may be listed as ethylene carbonates, propyl carbonates, butyl carbonates, $\gamma$-butyrolactone, sulfur esters (sulfur esters) and the like. The chain carbonates may be listed as polar chain carbonates and aliphatic branched chain carbonates with low viscosity represented by dimethyl carbonates, diethyl carbonates, ethyl methyl carbonates and the like. A mixed solvent of the cyclic carbonates (especially ethylene carbonates) and the chain carbonates is particularly preferred.

The ethers may be listed as dimethyl ether tetraethylene glycol (TEGDME), glycol dimethyl ethers (DMEs), 1,3-dioxolane (DOL) and the like.

In addition, in addition to the above non-aqueous solvent, chain alkyl esters such as methyl propionate, chain phosphate triesters such as trimethyl phosphate, nitrile solvents such as 3-methoxypropionitrile, branched chain compounds with ether bonds represented by dendritic compounds and other non-aqueous solvents (organic solvents) may further be adopted.

In addition, fluorinated solvents may also be adopted. As a fluorinated solvent, for example, $H(CF_2)_2OCH_3$, $C_4F_9OCH_3$, $H(CF_2)_2OCH_2CH_3$, $H(CF_2)_2OCH_2CF_3$, $H(CF_2)_2CH_2O(CF_2)_2H$ and the like, or (perfluoroalkyl) alkyl ethers with straight chain structures such as $CF_3CHFCF_2OCH_3$, and $CF_3CHFCF_2OCH_2CH_3$, such as 2-trifluoromethyl hexafluoropropyl methyl ether, 2-trifluoromethyl hexafluoropropyl ethyl ether, 2-trifluoromethyl hexafluoropropyl propyl ether, 3-trifluoromethyl octafluorobutyl methyl ether, 3-trifluoromethyl octa-fluorobutyl ether, 3-trifluoromethyl octa-fluorobutylpropyl ether, 4-trifluoromethyl decafluoroamyl methyl ether, 4-trifluoromethyl decafluoroamyl ethyl ether, 4-trifluoromethyl decafluoroamyl propyl ether, 5-trifluoromethyl dodecafluorohexyl methyl ether, 5-trifluoromethyl dodecafluorohexyl ethyl ether, 5-trifluoromethyl dodecafluorohexyl propyl ether, 6-trifluoromethyl tetradecroheptyl methyl ether, 6-trifluoromethyl tetradecluheptyl ethyl ether, 6-trifluoromethyl tetradecluoroheptyl propyl ether, 7-trifluoromethyl hexafluoroctenyl methyl ether, 7-trifluoromethyl cetafluooctane ethyl ether, 7-trifluoromethyl hexafluoroctenyl propyl ether and the like may be listed.

In addition, a mixture of iso (perfluoroalkyl) alkyl ethers and the (perfluoroalkyl) alkyl ethers with straight chain structures may also be used.

As an electrolyte salt used in the non-aqueous electrolyte solution, lithium salts such as lithium perchlorates, organic boron lithium salts, lithium salts of fluorine-containing compounds, and lithium imide salts.

As an example of such electrolyte salts, for example, $LiClO_4$, $LiPF_6$, $LiBF_4$, $LiAsF_6$, $LiSbF_6$, $LiCF_3SO_3$, $LiCF_3CO_2$, $LiC_2F_4(SO_3)_2$, $LiN(C_2F_5SO_2)_2$, $LiC(CF_3SO_2)_3$, $LiC_nF_{2n+1}SO_3(n\geq2)$, $LiN(R_fOSO_2)_2$ (where, $R_f$ is fluoroalkyl) and the like may be listed. In these lithium salts, fluorine-containing organic lithium salts are particularly preferred. The fluorine-containing organic lithium salts are easy to dissolve in the non-aqueous electrolyte solution due to large anion polarity and easy separation into ions.

A concentration of the electrolyte lithium salts in the non-aqueous electrolyte solution, for example, is more than 0.3 mol/L (mole/litre), further optionally more than 0.7 mol/L; and it is optionally lower than 1.7 mol/L, further optionally lower than 1.2 mol/L. When the concentration of the electrolyte lithium salts is too low, ion conduction is too small, and when it is too high, there is a concern that the electrolyte salts that have not been completely dissolved are precipitated.

In some implementations, the electrolyte solution further optionally includes an additive, which is not particularly limited in the present application. For example, the additive may include a negative electrode film-forming additive, and a positive electrode film-forming additive, and may also include additives that can improve certain battery properties, such as additives that improve battery overcharge performance, additives that improve battery high or low temperature performance, and the like.

[Battery module, battery pack and electrical apparatus]

A third aspect of the present application provides a battery module, including the secondary battery of the second aspect of the present application. The battery module may be prepared by a method commonly used in the field.

A fourth aspect of the present application provides a battery pack, including at least one of the secondary battery of the second aspect of the present application or the battery module of the third aspect of the present application. The battery pack may be prepared by a method commonly used in the field.

A fifth aspect of the present application provides an electrical apparatus, including at least one of the secondary battery of the second aspect of the present application, the battery module of the third aspect of the present application or the battery pack of the fourth aspect of the present application.

Moreover, the secondary battery, the battery module, the battery pack and the electrical apparatus of the present application will be described hereafter with appropriate reference to the drawings.

In some implementations, the secondary battery may include an outer package. The outer package may be used to encapsulate the above-mentioned electrode assembly and electrolyte.

In some implementations, the outer package of the secondary battery may be a hard case, e.g., a hard plastic case, an aluminum case, a steel case, etc. The outer package of the secondary battery may also be a soft pack, such as a bag-type soft pack. The material of the soft pack may be plastic, and as the plastic, polypropylene, polybutylene terephthalate, and polybutylene succinate may be listed.

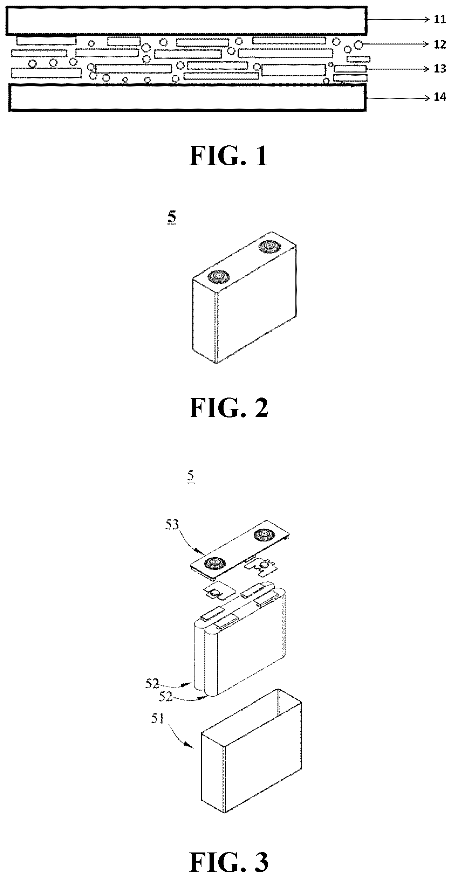

The present application has no particular limitation on the shape of the secondary battery, which may be cylindrical, square or any other shapes. For example, Fig. 2 shows an example of a secondary battery 5 having a square structure.

In some embodiments, referring to Fig. 3, the outer package may include a case 51 and a cover plate 53. Here, the case 51 can include a bottom plate and a side plate connected to the bottom plate, with the bottom plate and the side plate enclosing to form an accommodating cavity. The case 51 has an opening that communicates with the accommodating cavity, and the cover plate 53 may cover the opening to close the accommodating cavity. The positive electrode sheet, the negative electrode sheet, and the separator may be formed into an electrode assembly 52 by a winding process or a lamination process. The electrode assembly 52 is encapsulated within the accommodating cavity. The electrolyte solution impregnates the electrode assembly 52. The number of electrode assemblies 52 included in the secondary battery 5 may be one or more, which may be selected by those skilled in the art according to specific actual requirements.

In some implementations, the secondary batteries may be assembled into a battery module, and the number of the secondary batteries included in the battery module may be one or more, and the specific number may be selected by those skilled in the art according to the application and capacity of the battery module.

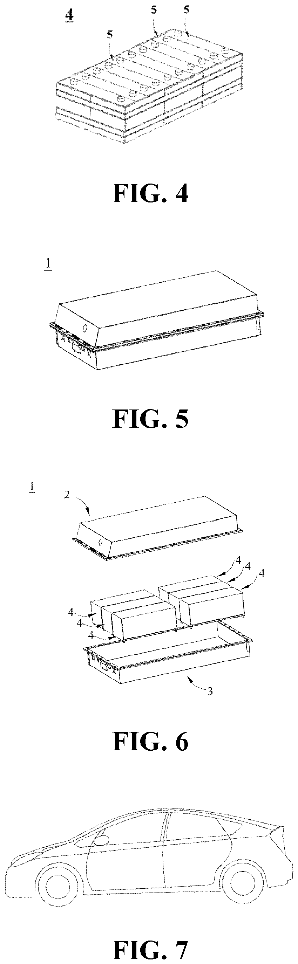

Fig. 4 shows a battery module 3 as an example. Referring to Fig. 4, in the battery module 4, a plurality of secondary batteries 5 may be sequentially arranged in a length direction of the battery module 4. Of course, they may also be arranged in any other way. The plurality of secondary batteries 5 may further be fixed by fasteners.

Optionally, the battery module 4 may further include a case having an accommodating space, in which the plurality of secondary batteries 5 are accommodated.

In some implementations, the battery modules may further be assembled into a battery pack, the number of battery modules included in the battery pack may be one or more, and the specific number may be selected by those skilled in the art according to the use and capacity of the battery pack.

Fig. 5 and Fig. 6 show a battery pack 1 as an example. Referring to Fig. 5 and Fig. 6, the battery pack 1 may include a battery box and a plurality of battery modules 4 arranged in the battery box. The battery box includes an upper box body 2 and a lower box body 3, the upper box body 2 can cover the lower box body 3 to form a closed space for accommodating the battery modules 4. The plurality of battery modules 4 may be arranged in the battery box in any manner.

In addition, the present application further provides an electrical apparatus, including at least one of the secondary battery, the battery module or the battery pack provided in the present application. The secondary battery, the battery module, or the battery pack may be used as a power source for the electrical apparatus, and may also be used as an energy storage unit for the electrical apparatus. The electrical apparatus may include, but is not limited to, a mobile device (such as a mobile phone, and a laptop), an electric vehicle (such as an all-electric vehicle, a hybrid electric vehicle, a plug-in hybrid electric vehicle, an electric bicycle, an electric scooter, an electric golf cart, and an electric truck), an electric train, a ship, a satellite, an energy storage system, etc.

For the electrical apparatus, the secondary battery, the battery module, or the battery pack can be selected according to the requirements during use.

Fig. 7 shows an electrical apparatus as an example. The electrical apparatus is an all-electric vehicle, a hybrid electric vehicle, or a plug-in hybrid electric vehicle, etc. In order to meet the requirements of the electrical apparatus for high power and high energy density of secondary batteries, a battery pack or a battery module may be used.

As another example, the apparatus may be a mobile phone, a tablet, a laptop, etc. The apparatus is generally required to be light and thin, and may use a secondary battery as a power source.

Example

Examples of the present application will be described hereinafter. The examples described below are exemplary and only used to explain the present application, and are not to be construed as limiting the present application. Where specific techniques or conditions are not specified in the examples, the techniques or conditions described in the literatures of the art or the product specifications are followed. All of the used agents or instruments which are not specified with the manufacturer are conventional commercially-available products.

**1. Separator**

Example 1

**Step 1: hydrophilic modification of a polypropylene film**

A surface of the polypropylene film (PP film) is coated with a nano hydrophilic graphene oxide layer

A 0.02 wt% isopropanol (IPA) dispersion of graphene oxide (GO, purchased from Nanjing Xianfeng Nano Technology Co., Ltd.) is prepared. An IPA aqueous solution with a volume fraction ratio of 20:1 for isopropanol to water is prepared, 0.02 g of GO is added into 100 g of the IPA aqueous solution, and subjected to ultrasonic concussion for 30 min to obtain the isopropanol (IPA) dispersion of GO. Then, 7 $\mu$m of PP film is completely immersed into the dispersion, and taken out for drying after 30 s, and this flow is repeated 5 times to obtain the PP film with a hydrophilic surface.

**Step 2: preparation of a mixed slurry**

An aqueous dispersion of GO with a solid content of 1 wt% (the preparation method being the same as step 1, using only water as a solvent, measured by a wet weight including water, and the same below), $SiO_2$ (400 nm, measured by a dry weight, the same below), and a mixed binder (measured by a dry weight of the mixed binder, the same below) are mixed in a mass ratio of 100:5:0.1, and stirring is performed at 800 rpm for 30 min to make the slurry evenly mixed and ready for use.

A preparation method of the mixed binder is to mix a mixed solution (water-based solvent) of 0.75 g of dopamine hydrochloride, 0.2 g of carboxymethyl cellulose sodium (CMC), 10 ml of deionized water and ethanol (1:1, v:v) evenly. Then, a NaOH aqueous solution with a concentration of 1 mol/L is used to adjust pH to 8.5, so as to obtain the mixed binder.

**Step 3: coating of a separator**

One side of the GO-modified PP film is evenly coated with the slurry obtained in step 2 by a scraper to prepare a $SiO_2$/GO-PP film.

**Composition of double-layer PP films**

Another $SiO_2$/GO-PP film is prepared according to steps 1-3 above. Then, coating sides of the two $SiO_2$/GO-PP films are overlapped relative to each other, subjected to hot pressing and composition at 150°C, and placed in a vacuum drying oven for drying overnight at 60°C until the solvent is completely removed, and a composite separator with a three-layer structure of PP-$SiO_2$/GO-PP is obtained. A thickness of a ceramic layer is 3 $\mu$m, and a total thickness is 17 $\mu$m.

**Example 2**

The other steps of Example 2 are the same as those of Example 1, except for changing a particle size of silicon dioxide to 700 nm in step 2.

**Example 3**

The other steps of Example 3 are the same as those of Example 1, except for changing a particle size of silicon dioxide to 200 nm in step 2.

**Example 4**

The other steps of Example 4 are the same as those of Example 1, except for changing ceramic particles from silicon dioxide to iron trioxide (with a particle size of about 100 nm) in step 2.

Iron trioxide can undergo alloying reaction with lithium dendrites, with high specific capacity, good stability, and low ionic conductivity, which is conducive to the consumption of the lithium dendrites and reduces the internal resistance caused by the separator.

**Example 5**

The other steps of Example 5 are the same as those of Example 1, except for changing ceramic particles from silicon dioxide to stannic oxide (with a particle size of about 100 nm) in step 2.

**Example 6**

The other steps of Example 6 are the same as those of Example 1, except for changing ceramic particles from silicon dioxide to titanium dioxide (with a particle size of about 100 nm, anatase type) in step 2.

Titanium dioxide can undergo intercalation reaction with lithium dendrites to generate lithium titanate. The theoretical capacity is high, the structure is stable, and an oxide structure will not undergo significant changes after lithium intercalation.

**Example 7**

The other steps of Example 7 are the same as those of Example 1, except for changing ceramic particles from silicon dioxide to cupric oxide (CuO, with a particle size of about 150 nm) in step 2.

Cupric oxide undergoes conversion reaction with lithium to generate amorphous $Li_2O$ and nano copper particles, and the generated nano copper particles can further react with $Li_2O$ to generate oxides, making it have high specific capacity and good cycling performance.

**Example 8**

Other conditions of Example 8 are the same as those of Example 1 except that the graphene oxide dispersion is not used in step 1 to hydrophilic modify the polypropylene film.

**Examples 9-14**

A mass ratio of the 1 wt% aqueous dispersion of GO (preparation method being the same as step 1, and using only water as the solvent), $SiO_2$ (400 nm) and the mixed binder is sequentially adjusted to

Example 9: 100:3:0.1;
Example 10: 100:8:0.1;
Example 11: 100:10:0.1;
Example 12: 100:5:0.05;
Example 13: 100:5:0.3;
Example 14: 100:5:0.5.

Others are the same as Example 1.

**Examples 15-17**

Other steps are the same as those of Example 1, except for changing a coating thickness into $4\mu m$, $5\mu m$, and $6\mu m$ in step 3.

**Examples 18-20**

Others are the same as Example 1 except that a mass ratio of the ceramic particles to the mixed binder is 1:0.001, 1:03 and 1:0.006 respectively.

**Examples 21-24**

Others are the same as Example 1 except that a mass ratio of a mass sum of the ceramic particles and the mixed binder to the graphene oxide is 2:1, 3:1, 9:1 and 11:1 respectively.

**Example 25**

Conditions of Example 25 are the same as those of Example 1, except for changing ceramic particles from silicon dioxide to aluminium oxide (with a particle size of about 400 nm) in step 2.

**Comparative Example 1**

Other steps are the same as those of Example 1 except that graphene oxide is not used in step 2.
Test results of Examples 1-25 and Comparative Example are shown in Table 1.

**2. Secondary battery**

**Preparation of a positive electrode sheet**

A positive electrode active material lithium iron phosphate (measured by $LiFePO_4$), a conductive acetylene black and a binder polyvinylidene fluoride (PVDF) are mixed according to a weight ratio of 96.5:2:1.5 and dissolved in a solvent N-methyl pyrrolidone (NMP), and are fully stirred and mixed evenly to obtain a positive electrode slurry. Then, an aluminum foil is evenly coated with the positive electrode slurry, followed by oven drying, cold pressing and slitting, to obtain a positive electrode sheet. A coating surface density of the obtained sheet is 19.5 $mg/cm^2$, and a compaction

density is 2.4 g/cm$^3$.

**Preparation of a negative electrode sheet**

Graphite, a conductive agent of acetylene black, a binder of PVDF and a thickening agent of sodium carboxymethylcellulose (CMC) are dissolved in a solvent of deionized water according to the mass ratio in parts by weight of 96.5:0.7:1.8:1, and are fully stirred and mixed evenly to obtain a negative electrode slurry. A copper foil of a negative-electrode current collector is coated with the negative electrode slurry, followed by oven drying, cold pressing and slitting, to obtain a negative electrode sheet. A coating surface density of the obtained sheet is 9.8 mg/cm$^2$, and a compaction density is 1.65 g/cm$^3$.

**Preparation of electrolyte solution**

An organic solvent of ethylene carbonate (EC)/ethyl methyl carbonate (EMC) is mixed evenly according to a weight ratio of 50/50, LiPF$_6$ is added and dissolved into the above organic solvent, and is stirred evenly, making a concentration of LiPF$_6$ be 1.1 mol/L, to obtain the electrolyte solution.

**Separator**

The separator prepared in the examples and the comparative example of the present application is used as a separator of a secondary battery.

**Secondary battery**

A positive electrode sheet, a separator and a negative electrode sheet are laminated in sequence, so that the separator is located between a positive electrode and a negative electrode for separation, and a bare battery cell is obtained by winding. The bare battery cell is placed in an outer package, injected with the electrolyte solution and encapsulated, to obtain the secondary battery. A size of the obtained secondary battery is 60×130×4 mm.

**Relevant parameter testing methods**

1. Performance test of a separator

1) Transverse direction (TD) test of the separator

It is tested according to ASTM D882-09 specification. The tested separator is cut into a size with a width of 10 mm and a length of ≥150 mm, a universal tensile machine is used to stretch at a rate of 500 mm/min to obtain a maximum load value at the time of specimen fracture, and then the maximum load value is divided by a cross-sectional area (specimen width×specimen thickness) of the separator to calculate a tensile strength of the separator.

2) Peeling force test of the separator

A rolling machine is used to apply a standard tape (31B, purchased from Nippon) with a width of 20 mm to a ceramic coating surface of the separator at a fixed stress (2 kg, 300 mm/min), a tensile testing machine is used to perform a 180-degree peel test at a speed of 300 mm/min, values of 50-point peel force are obtained from a testing distance of 50 mm to 120 mm, and an average value is calculated.

3) Wettability test of the separator

The tested separator is cut into a size of 50 mm×50 mm, a 1 ml of standard electrolyte solution (an electrolyte solution formed by dissolving LiPF$_6$ into a mixed solvent of ethylene carbonate (EC), ethyl methyl carbonate (EMC) and dimethyl carbonate (DMC) with a weight ratio of 1:1:1, and a concentration of LiPF$_6$ is 1 mol/l) is dropped on a sample, and an included angle between the liquid drop and the separator is observed with a contact angle meter.

4) Liquid suction test of the separator

The tested separator is cut into a size of 200 mm×15 mm, a sample is vertically suspended above an electrolyte solution solvent (a mixed solvent with a weight ratio of EC:DMC:DEC being 1:1:1) in a closed space, a lower end of the separator is exactly in contact with the solvent surface, after 15 minutes, a height of capillary liquid suction of the separator is recorded, and a liquid suction rate (liquid suction height/liquid suction time) is calculated.

2. Particle size test of ceramic particles

Particle size analysis Dv50: diameters of particles accounting for 50% of the total volume are greater than the value, diameters of other particles accounting for 50% of the total volume are less than the value, and Dv50 represents a median particle size of the powder;

When the particles are irradiated by laser beams, an angle of its scattered light is inversely proportional to the diameters of the particles, the scattered light intensity decreases logarithmically with the increase of the angle. The energy distribution of the scattered light is directly related to the distribution of the particle diameter. The particle size distribution characteristics may be obtained by receiving and measuring the energy distribution of the scattered light. A reference standard is a particle size distribution laser diffraction method of GB/T19077.1-2009.

3. Coating surface density ($\rho$) test of a coating

Coating surface density ($\rho$)=coating weight (m)/coating area (A).

A weight ($m_0$) of a separator before coating and a weight ($m_1$) of a separator after coating are weighed, and a difference between the two is the coating weight. At the same time, a coated area of the separator is measured to obtain the coating surface density.

4. Ionic resistivity ($\rho_s$) test of the separator caused by the coating

A test method is to adopt an electrochemical impedance spectroscopy to study the effect of the separator on lithium ion permeability in batteries. In the electrochemical impedance spectroscopy measured by using an alternating current method, the internal resistance (related to the resistance of the separator) of the batteries may be obtained, and therefore, the charge transfer resistance of the batteries may be obtained by using this method. An IVIUM electrochemical workstation is used for testing, with a frequency of 0.1 Hz-100 kHz.

According to a law of resistance, a limited symmetrical battery EIS method is used to measure Rs of the layer number (n) of different separators as the separator resistance, a slope k is obtained by plotting Rs and n, and the ionic resistivity of the separator is calculated under the conditions of known effective area S and separator thickness.

An actual test result is usually the ionic resistance of the battery, namely volume resistance. The ionic resistance ($R_b$) obtained from an experimental test is a sum of the separator resistance ($R_s$) and an electrolyte solution resistance ($R_e$) in the battery, as shown below

$$R_{\mathrm{b}} = R_{\mathrm{s}} + R_{\mathrm{e}}$$

For the convenience of calculation, the influence of Re may be ignored, it may be approximately considered that Rs=Rb, and then the resistivity ($\rho_s$) of the separator may be obtained according to the following formula

$$\rho_{\mathrm{s}} = \frac{R_{\mathrm{b}}S}{d}$$

Where, $\rho_s$ is the resistivity of the separator, S is the effective area of the separator, and d is an average thickness of the separator.

5. Solid content test

The solid content may be tested according to GB/T 1725-2007 "Determination of Non volatile Matter Content of Paints, Varnishes, and Plastics".

6. Performance test of a secondary battery

Coulombic efficiency test:

1) charging conditions: a battery is charged by using a constant current-constant voltage mode (CC-CV mode) at a room temperature. Firstly, the battery is charged in a constant current mode with a fixed current of 0.1 C until the voltage rises to 3.65 V, and then it is switched to a constant voltage mode until the current is 0.02 C, making the battery be fully charged.

2) discharging conditions: it is discharged in the constant current mode at different discharge rates (C-rate: 0.1 C/1 C/3 C) to 2.5 V, and cycled for 200 circles.

3) the coulombic efficiency (discharge capacity/charging capacity*100%) at different discharge rates after 200 circles is calculated and recorded to obtain Table 1.

Power test:

1) charging conditions: a battery is charged by using a constant current-constant voltage mode (CC-CV mode) at a room temperature. Firstly, the battery is charged in a constant current mode with a fixed current of 0.1 C until the voltage rises to 3.65 V, and then it is switched to a constant voltage mode until the current is 0.02 C, making the battery be fully charged;

2) discharging conditions: it is discharged in the constant current mode at a discharge rate of 0.1 C to 2.5 V; and

3) an average power (voltage*current) in charging and discharging processes is calculated and recorded.

Table 1 Test results of Examples and Comparative Examples

| Test items | GO aqueous dispersion (1 wt%): ceramic: mixed binder | Ceramic : binder | (Ceramic + binder)/ GO | GOI Ceramic | Tensile strength (MPa) | Peel force (N) | Wetting angle (°) | Liquid suction rate (mm/min) | $\rho_s$ (mΩ·cm) | Coulombic efficiencv/ % | | | Power /10^-3W |
|---|---|---|---|---|---|---|---|---|---|---|---|---|---|
| | | | | | | | | | | 0.1 C | 1 C | 3 C | |
| Example 1 | 100:5:0.1 | 1:0.02 | 5.1:1 | 1:5 | 65.8 | 14 | 12 | 1.5 | $4.82\times10^6$ | 99.9 | 97.7 | 86.8 | 2.38 |
| Example 2 | 100:5:0.1 | 1:0.02 | 5.1:1 | 1:5 | 62.5 | 12 | 14 | 1.4 | $5.00\times10^6$ | 99.8 | 97.5 | 86.5 | 236 |
| Example 3 | 100:5:0.1 | 1:0.02 | 5.1:1 | 1:5 | 64.7 | 11 | 13 | 1.4 | $4.90\times10^6$ | 99.7 | 97.5 | 86.5 | 2.35 |
| Example 4 | 100:5:0.1 | 1:0.02 | 5.1:1 | 1:5 | 64.2 | 13 | 14 | 1.3 | $4.95\times10^6$ | 99.6 | 97.2 | 86.4 | 2.38 |
| Example 5 | 100:5:0.1 | 1:0.02 | 5.1:1 | 1:5 | 62.1 | 11 | 15 | 1.2 | $4.99\times10^6$ | 99.6 | 97.2 | 86.3 | 237 |
| Example 6 | 100:5:0.1 | 1:0.02 | 5.1:1 | 1:5 | 64.5 | 12 | 16 | 1.2 | $5.02\times10^6$ | 99.6 | 96.8 | 85.9 | 2.34 |
| Example 7 | 100:5:0.1 | 1:0.02 | 5.1:1 | 1:5 | 63.5 | 13 | 16 | 1.2 | $5.08\times10^6$ | 99.7 | 96.7 | 85.6 | 237 |
| Example 8[1] | 100:5:0.1 | 1:0.02 | 5.1:1 | 1:5 | 60.2 | 9 | 18 | 0.9 | $5.80\times10^6$ | 99.3 | 95.9 | 82.1 | 2.11 |
| Example 9 | 100:3:0.1 | 1:0.033 | 3.1:1 | 1:3 | 61.1 | 10 | 15 | 1.2 | $5.11\times10^6$ | 99.6 | 96.5 | 84.9 | 2.28 |
| Example 10 | 100:8:0.1 | 1:0.013 | 8.1:1 | 1:8 | 61.8 | 10 | 16 | 1.1 | $5.12\times10^6$ | 99.6 | 96.2 | 84.6 | 2.28 |
| Example 11 | 100:10:0.1 | 1:0.01 | 10.1:1 | 1:10 | 61.9 | 11 | 15 | 1.2 | $5.15\times10^6$ | 99.6 | 96.2 | 84.7 | 229 |
| Example 12 | 100:5:0.05 | 1:0.01 | 5.05:1 | 1:5 | 63.8 | 16 | 14 | 1.4 | $5.19\times10^6$ | 99.6 | 95.7 | 85.3 | 2.32 |
| Example 13 | 100:5:0.3 | 1:0.06 | 5.3:1 | 1:5 | 64.6 | 17 | 15 | 1.2 | $5.27\times10^6$ | 99.5 | 95.6 | 84.9 | 227 |
| Example 14 | 100:5:0.5 | 1:0.1 | 5.5:1 | 1:5 | 65.7 | 18 | 15 | 1.2 | $5.30\times10^6$ | 99.6 | 95.5 | 84.6 | 2.25 |
| Example 15[2] | 100:5:0.1 | 1:0.02 | 5.1:1 | 1:5 | 64.3 | 16 | 16 | 1.1 | $5.35\times10^6$ | 99.4 | 95.4 | 84.1 | 2.23 |
| Example 16 | 100:5:0.1 | 1:0.02 | 5.1:1 | 1:5 | 64.8 | 17 | 17 | 1.1 | $5.44\times10^6$ | 99.4 | 95.0 | 83.6 | 2.19 |
| Example 17 | 100:5:0.1 | 1:0.02 | 5.1:1 | 1:5 | 65.3 | 17 | 17 | 1.0 | $5.58\times10^6$ | 99.4 | 94.9 | 83.4 | 2.17 |
| Example 18 | 100:5:0.005 | 1:0.001 | 5.005:1 | 1:5 | 60.9 | 9 | 15 | 1.2 | $4.61\times10^6$ | 99.4 | 94.8 | 84.4 | 2.23 |
| Example 19 | 100:5:1.5 | 1:0.3 | 6.5:1 | 1:5 | 66.5 | 15 | 15 | 1.2 | $5.03\times10^6$ | 99.6 | 96.8 | 85.9 | 2.25 |
| Example 20 | 100:5:0.03 | 1:0.006 | 5.03:1 | 1:5 | 61.4 | 10 | 17 | 1.0 | $4.63\times10^6$ | 99.3 | 94.7 | 84.3 | 2.21 |
| Example 21 | 100:1.95: 0.05 | 1:0.026 | 2:1 | 1:1.95 | 61.2 | 12 | 18 | 1.3 | $5.14\times10^6$ | 99.3 | 95.2 | 84.2 | 2.23 |
| Example 22 | 100:2.95: 0.05 | 1:0.017 | 3:1 | 1:2.95 | 64.4 | 15 | 16 | 1.2 | $5.14\times10^6$ | 99.4 | 95.4 | 85.4 | 2.23 |

| Test items | GO aqueous dispersion (1 wt%): ceramic: mixed binder | Ceramic : binder | (Ceramic + binder)/ GO | GOI Ceramic | Tensile strength (MPa) | Peel force (N) | Wetting angle (°) | Liquid suction rate (mm/min) | $\rho_s$ (mΩ·cm) | Coulombic efficiency/ % | | | Power /10$^{-3}$W |
|---|---|---|---|---|---|---|---|---|---|---|---|---|---|
| | | | | | | | | | | 0.1 C | 1 C | 3 C | |
| Example 23 | 100:8.95: 0.05 | 1:0.006 | 9:1 | 1:8.95 | 61.9 | 12 | 16 | 1.2 | $5.20\times10^6$ | 99.2 | 95.2 | 84.1 | 2.24 |
| Example 24 | 100:10.95 :0.05 | 1:0.005 | 11:1 | 1:10.95 | 61.0 | 11 | 15 | 1.3 | $5.21\times10^6$ | 99.2 | 95.1 | 84.0 | 2.23 |
| Example 25[3] | 100:5:0.1 | 1:0.02 | 5.1:1 | 1:5 | 59.2 | 8 | 20 | 0.8 | $5.85\times10^6$ | 99.1 | 94.5 | 79.9 | 1.98 |
| Comparative Example 1 | - | 1:0.02 | - | - | 58.9 | 7 | 21 | 0.4 | $6.58\times10^6$ | 98.2 | 93.8 | 75.1 | 1.82 |

Remarks: [1]: the graphene oxide dispersion is not used to hydrophilic modify the polypropylene film;

[2]: the coating thicknesses of Examples 15-17 are 4 μm, 5 μm and 6 μm respectively;

[3]: aluminium oxide (with a particle size of about 400 nm) as the ceramic particles.

EP 4 451 452 A1

It can be seen from the results in Table 1, 1) the separator pretreated with the graphene oxide dispersion can be in contact with the ceramic-graphene oxide coating more effectively, which helps to better improve the comprehensive performance of the separator; 2) compared to aluminium oxide, the use of other ceramic particles in the present application can better improve the mechanical performance and wettability of the separator; 3) graphene oxide helps to improve the adhesion, wettability and ionic conductivity of the separator; and 4) the comprehensive performance of the separator may be further improved by adjusting the ratio of the graphene oxide, the binder and the ceramic particles.

In addition, it can be seen from the results in Table 1, the secondary battery corresponding to the separator coated with the graphene oxide-ceramic particle mixed coating has high coulomb efficiency, which can still be kept above 99% after cycling for 200 circles at low magnification; and the coulombic efficiency at high magnification is also high, indicating that the secondary battery has good cycling performance and longer service life. Meanwhile, compared to the Comparative Example 1, the secondary battery using the separator in the present application has higher power, indicating that its dynamic performance is better. In addition, due to the excellent dendrite resistance of the separator, the lithium dendrites generated in the cycling process can be consumed timely, so that the corresponding secondary battery has good safety performance.

It should be noted that the present application is not limited to the implementations above. The above-described implementations are merely instances, and implementations having substantively the same composition as the technical idea and exerting the same effects within the scope of the technical solutions of the present application are all included in the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

## Claims

1. A separator, comprising first base films sequentially arranged in a stacked manner, a second base film, and a coating containing ceramic particles, graphene oxide and a binder located between the first base films and the second base film.

2. The separator according to claim 1, wherein a mass ratio of the ceramic particles to the binder is 1:0.001-0.3, optionally 1:0.01-0.1.

3. The separator according to claim 1 or 2, wherein a mass ratio of a mass sum of the ceramic particles and the binder to the graphene oxide is 2-11:1, optionally 2-9:1.

4. The separator according to any one of claims 1 to 3, wherein a mass ratio of the graphene oxide to the ceramic particles is 1:1.5-11, optionally 1:3-5.

5. The separator according to any one of claims 1 to 4, wherein
   the graphene oxide is a graphene oxide plate, and optionally, the largest lateral dimension of the graphene oxide plate is 0.01-10 $\mu$m.

6. The separator according to any one of claims 1 to 5, wherein

   the ceramic particles are selected from one or more of oxides, nitrides or oxysalts of the following elements: Si, Fe, Sn, Ti, Cu, Mg, Ge, Zn, Zr and B;
   optionally, one or more of oxides of Si, nitrides of Si, oxides of Fe, nitrides of Fe, oxysalts of Fe, oxides of Sn, oxides of Ti, nitrides of Ti, oxysalts of Ti, oxides of Cu, nitrides of Cu, oxides of Mg, oxides of Ge, oxides of Zn, oxides of zirconium, and boron nitride; and
   further optionally, one or more of titanium dioxide, silicon dioxide, tin dioxide, zinc oxide, zirconium oxide, and lithium titanate.

7. The separator according to any one of claims 1 to 6, wherein a particle size of the ceramic particles is 0.01-10 $\mu$m, optionally 0.05-0.5 $\mu$m.

8. The separator according to any one of claims 1 to 7, wherein the binder is selected from one or more of dopamine hydrochloride, polyvinylidene fluoride, polytetrafluoroethylene, a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, fluorinated acrylate, butadiene styrene rubber, sodium polyacrylate, polymethylacrylic acid, polyacrylamide, polyvinyl alcohol, sodium alginate, carboxymethyl chitosan, and sodium carboxymethylcellulose.

9. The separator according to any one of claims 1 to 8, wherein a thickness of the coating is 0.1-10 $\mu$m, optionally 1-6 $\mu$m.

10. The separator according to any one of claims 1 to 9, wherein the first base film and the second base film are each independently selected from one or more of polyethylene, polypropylene, polytetrafluoroethylene, polyvinylidene fluoride, polyvinyl chloride, polyamide, and polyester.

11. The separator according to any one of claims 1 to 10, wherein the first base film and/or the second base film are subjected to a wetting treatment with a graphene oxide dispersion.

12. The separator according to any one of claims 1 to 11, wherein a thickness of the first base film and/or the second base film is 3-30 $\mu$m, optionally 5-25 $\mu$m.

13. The separator according to any one of claims 1 to 12, wherein the separator satisfies: $\rho_s \leq 10^7 \, \text{m}\Omega\cdot\text{cm}$, optionally $\rho_s \leq 5 \times 10^6 \, \text{m}\Omega\cdot\text{cm}$, wherein $\rho_s$ represents an ionic resistivity of the separator.

14. A secondary battery, comprising the separator according to any one of claims 1 to 13.

15. A battery module, comprising the secondary battery according to claim 14.

16. A battery pack, comprising at least one of the secondary battery according to claim 14 or the battery module according to claim 15.

17. An electrical apparatus, comprising at least one of the secondary battery according to claim 14, the battery module according to claim 15 or the battery pack according to claim 16.

→ 11
→ 12
→ 13
→ 14

**FIG. 1**

5

**FIG. 2**

5

53

52
52

51

**FIG. 3**

FIG. 4

FIG. 5

FIG. 6

FIG. 7

## INTERNATIONAL SEARCH REPORT

International application No.

**PCT/CN2022/105167**

### A. CLASSIFICATION OF SUBJECT MATTER

H01M 50/457(2021.01)i

According to International Patent Classification (IPC) or to both national classification and IPC

### B. FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, WPI, EPODOC, CNKI: 电池, 隔膜, 隔离膜, 隔板, 基膜, 基材, 基底, 涂层, 无机, 陶瓷, 氧化石墨烯, GO, 层, 膜, 之间, 中间, 第一, 第二, battery, membrane, separator, base, substrate, coating, layer, film, inorganic, ceramic, graphene w oxide, between, intermediate, first, second

### C. DOCUMENTS CONSIDERED TO BE RELEVANT

| Category* | Citation of document, with indication, where appropriate, of the relevant passages | Relevant to claim No. |
|---|---|---|
| Y | US 2011143181 A1 (SAMSUNG SDI CO., LTD.) 16 June 2011 (2011-06-16) description, paragraphs 29-73 | 1-17 |
| Y | CN 109565018 A (LG CHEMICAL LTD.) 02 April 2019 (2019-04-02) description, paragraphs 29-100 | 1-17 |
| Y | CN 109980164 A (NINGDE AMPEREX TECHNOLOGY LTD.) 05 July 2019 (2019-07-05) description, paragraphs 28-78 | 1-17 |
| Y | CN 105304846 A (TIANNENG BATTERY GROUP CO., LTD.) 03 February 2016 (2016-02-03) description, paragraphs 6-31, and figure 1 | 1-17 |
| Y | CN 215732079 U (NINGBO YIWEI CHUANGNENG LITHIUM BATTERY CO., LTD.) 01 February 2022 (2022-02-01) description, paragraphs 8-38 | 1-17 |
| Y | CN 105970605 A (XIAMEN UNIVERSITY) 28 September 2016 (2016-09-28) description, paragraphs 15-31 | 1-17 |
| Y | CN 104022247 A (CHINA FAW CO., LTD.) 03 September 2014 (2014-09-03) description, paragraphs 5-11 | 1-17 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 November 2022** | **28 November 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/105167** |

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 108550762 A (SOUNDON NEW ENERGY TECHNOLOGY CO., LTD.) 18 September 2018 (2018-09-18)<br>        description, paragraphs 4-24 | 1-17, |

Form PCT/ISA/210 (second sheet) (January 2015)

**INTERNATIONAL SEARCH REPORT**
Information on patent family members

International application No.

**PCT/CN2022/105167**

| Patent document cited in search report | | | Publication date (day/month/year) | Patent family member(s) | | | Publication date (day/month/year) |
|---|---|---|---|---|---|---|---|
| US | 2011143181 | A1 | 16 June 2011 | KR | 20110067859 | A | 22 June 2011 |
| CN | 109565018 | A | 02 April 2019 | WO | 2018124635 | A1 | 05 July 2018 |
| | | | | EP | 3451414 | A1 | 06 March 2019 |
| | | | | KR | 20180076218 | A | 05 July 2018 |
| | | | | JP | 2019517116 | A | 20 June 2019 |
| | | | | US | 2020321579 | A1 | 08 October 2020 |
| | | | | EP | 3451414 | A4 | 01 May 2019 |
| CN | 109980164 | A | 05 July 2019 | EP | 3712983 | A1 | 23 September 2020 |
| | | | | US | 2020303707 | A1 | 24 September 2020 |
| CN | 105304846 | A | 03 February 2016 | None | | | |
| CN | 215732079 | U | 01 February 2022 | None | | | |
| CN | 105970605 | A | 28 September 2016 | None | | | |
| CN | 104022247 | A | 03 September 2014 | None | | | |
| CN | 108550762 | A | 18 September 2018 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 30544132018 T
- GB 218632008 T

- GB 1907712009 T
- GB 17252007 T